(19) Europäisches Patentamt
European Patent Office
Office européen des brevets

(11) EP 2 186 848 A1

(12) EUROPEAN PATENT APPLICATION
published in accordance with Art. 153(4) EPC

(43) Date of publication:
**19.05.2010 Bulletin 2010/20**

(21) Application number: **08831533.8**

(22) Date of filing: **22.09.2008**

(51) Int Cl.:
***C08J 5/18*** *(2006.01)* ***B29C 41/04*** *(2006.01)*
***C08L 79/04*** *(2006.01)*

(86) International application number:
**PCT/JP2008/067058**

(87) International publication number:
**WO 2009/038205 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.09.2007 JP 2007243665**

(71) Applicant: **Ube Industries, Ltd.**
**Ube-shi**
**Yamaguchi 755-8633 (JP)**

(72) Inventors:
- **NAKAYAMA, Takeshige**
  **Ube-shi**
  **Yamaguchi 755-8633 (JP)**
- **TAKABAYASHI, Seiichirou**
  **Ube-shi**
  **Yamaguchi 755-8633 (JP)**
- **MURAKAMI, Tooru**
  **Ube-shi**
  **Yamaguchi 755-8633 (JP)**

(74) Representative: **Forstmeyer, Dietmar et al**
**BOETERS & LIECK**
**Oberanger 32**
**80331 München (DE)**

# (54) PROCESS FOR PRODUCTION OF POLYIMIDE FILM, AND POLYAMIC ACID SOLUTION COMPOSITION

(57) A process of producing a polyimide film including applying a polyamic acid solution composition to a substrate to form a coating layer and heating the coating layer, wherein the polyamic acid solution composition contains a mixed solvent system of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system, and a polyamic acid composed mainly of s-BPDA and PPD. The process enables a film with a thickness exceeding 40 μm to be formed without involving bubble formation.

EP 2 186 848 A1

## Description

TECHNICAL FIELD

This invention relates to a process for producing a polyimide film by which a thick and yet bubble-free aromatic polyimide film having a specific chemical structure and exhibiting very high tensile strength, tensile elastic modulus, and tear strength can be provided. It also relates to a polyamic acid solution composition used to carry out the process.

BACKGROUND ART

Aromatic polyimide is suitably used in electric or electronic parts because of its excellent characteristics, such as heat resistance, chemical resistance, electric characteristics, and mechanical strength. *Inter alia,* an aromatic polyimide derived mainly from 3,3',4,4'-biphenyltetracarboxylic acid dianhydride (hereinafter sometimes abbreviated as s-BPDA) and p-phenylenediamine (hereinafter sometimes abbreviated as PPD) is superior in heat resistance, mechanical characteristics, dimensional stability, and so on and is preferably used in applications demanding these characteristics, such as flexible printed circuit boards and fixing belts of copiers, as stated in patent document 1 (see below).
Patent document 2 (see below) proposes a process of producing a polyimide endless belt, which process uses a polyamic acid solution composition containing a mixed solvent so as to attain a high imidization ratio by baking even at a lowered temperature for a reduced period of time. Patent document 3 (see below) proposes a process for producing a seamless belt, which process uses a polyamic acid composition containing, similarly to patent document 2, a mixed solvent in order to achieve the step of film formation by heating efficiently in a short time and to obtain good flexibility even with a conductive filler, such as carbon black, incorporated therein.

Patent document 1: JP 55-7805A
Patent document 2: JP 2005-163007A
Patent document 3: JP 2006-272839A

DISCLOSURE OF THE INVENTION

Problem to be Solved by the Invention

A polyimide film derived mainly from s-BPDA and PPD is very useful in various applications because of its excellent heat resistance and mechanical characteristics. However, when a polyamic acid solution composition containing s-BPDA and PPD as main components is applied in a large thickness to a substrate and heated in an attempt to obtain a thick polyimide film, a problem of poor film forming properties (molding properties) arises such that foaming occurs easily in the applied thick mass of the composition during the step of heating, resulting in a failure to make a satisfactory polyimide film.
An object of the invention is to provide an improvement of film forming (or molding) properties in a process for producing a polyimide film derived mainly from s-BPDA and PPD, the process including applying a polyamic acid solution composition containing a mixture of specific solvents onto a substrate to form a coating layer and heating the coating layer, the improvement being such that a polyimide film having excellent heat resistance and mechanical properties, especially tensile strength, tensile elastic modulus, and tear strength can be obtained without involving bubble formation even with a large film thickness.
Another object of the invention is to provide a polyamic acid solution composition for carrying out the above described process.

Means for Solving the Problem

The invention relates to a process of producing a bubble-free polyimide film with a thickness exceeding 40 μm. The process includes applying a polyamic acid solution composition to a substrate to form a coating layer and heating the coating layer. The polyamic acid solution composition contains a mixed solvent system of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system, and a polyamic acid having a repeating unit represented by chemical formula (1) shown below as a main component.
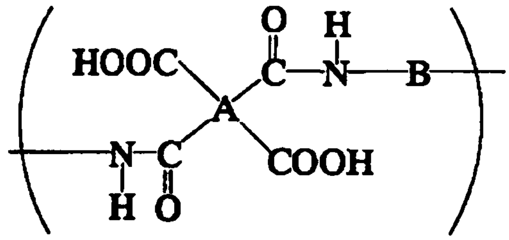

Chemical formula (1)

wherein A represents chemical formula (2) below, and B represents chemical formula (3) below.

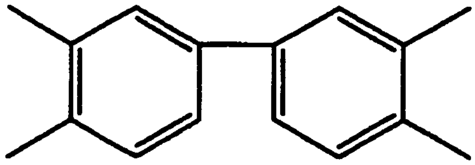

Chemical formula (2)

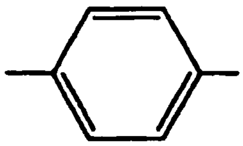

Chemical formula (3)

In a preferred embodiment of the process of producing a polyimide film, the resulting polyimide film has a tensile strength at break of 350 MPa or more, preferably 380 MPa or more, more preferably 400 MPa or more, and a tensile elongation at break of 30% or more; and/or the resulting polyimide film has a tensile elastic modulus of 6.0 GPa or more, preferably 6.5 GPa or more, more preferably 7.0 GPa or more; and/or the resulting polyimide film has a tear strength of 4.0 N/mm or more, preferably 4.3 N/mm or more, more preferably 4.5 N/mm or more.

In another preferred embodiment of the process of producing a polyimide film, the highest temperature in the step of heating is 275 to 450°C, preferably 300 to 450°C, more preferably 350 to 450 C.

In still another preferred embodiment of the process of producing a polyimide film, the polyimide film is a seamless belt.

The invention also relates to a polyamic acid solution composition used to produce a polyimide film with a thickness exceeding 40 μm. The polyamic acid solution composition contains a mixed solvent system of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system, and a polyamic acid having a repeating unit represented by chemical formula (1) as a main component.

BEST MODE FOR CARRYING OUT THE INVENTION

The polyamic acid solution composition used in the production process of the invention contains a polyamic acid having the repeating unit of chemical formula (1) as a main component, i.e., a polyamic acid prepared from 3,3',4,4'-biphenyltetracarboxylic acid compounds as a main tetracarboxylic acid component and p-phenylenediamine as a main diamine component. As used herein, the phrases "as a main tetracarboxylic acid component" and "as a main diamine component" are used to mean that the 3,3',4,4'-biphenyltetracarboxylic acid compounds and the p-phenylenediamine form a proportion of at least 90 mol%, preferably 95 mol% or more, more preferably 100 mol%, relative to the total tetracarboxylic acid component and the total diamine component, respectively. If more than 10 mol% of the total tetracarboxylic acid component is other than the 3,3',4,4'-biphenyltetracarboxylic acid compounds, or if more than 10

mol% of the total diamine component is other than p-phenylenediamine, it would be uneasy to obtain a polyimide film with good heat resistance and mechanical properties, particularly tensile strength, tensile elastic modulus, and tear strength.

The term "3,3',4,4'-biphenyltetracarboxylic acid compounds" as used herein denotes a compound capable of constructing the tetracarboxylic acid portion of the polyamic acid, including not only 3,3',4,4'-biphenyltetracarboxylic acid but its dianhydride and its ester with an alcohol. This term is especially intended to indicate 3,3',4,4'-biphenyltetracarboxylic acid dianhydride.

Suitable examples of the tetracarboxylic acid component other than the 3,3',4,4'-biphenyltetracarboxylic acid compounds include, but are not limited to, 2,3,3',4-biphenyltetracarboxylic acid compounds, pyromellitic acid compounds, 3,3'4,4'-benzophenonetetracarboxylic acid compounds, 2,3,6,7-naphthalenetetracarboxylic acid compounds, 4,4'-oxydiphthalic acid compounds, and 3,3',4,4'-diphenylsulfonetetracarboxylic acid compounds.

Suitable examples of the diamine component other than p-phenylenediamine include, but are not limited to, m-phenylenediamine, diaminodiphenyl ether, diaminotoluene, diaminonaphthalene, diaminodiphenylmethane, and diaminodiphenylsulfone.

The polyamic acid is prepared using any convenient known process or condition. In an exemplary preferred mode, a tetracarboxylic acid dianhydride and a diamine are allowed to react in an organic solvent in such concentrations as to give a solid concentration of about 5% to 50% by mass in terms of polyimide while stirring at a temperature preferably of 100°C or lower, more preferably 80°C or lower, which temperature is preferred for preventing the imidization between the amide bond and the carboxyl group of the polyamic acid formed, for a period of 0.1 to several tens of hours to prepare a uniform polyamic acid solution. When the solid concentration in terms of polyimide is less than 5 mass%, the solvent should be used in a large quantity, which is uneconomical. When the solid concentration exceeds 50 mass%, the reaction system is so viscous as to tend to be difficult to handle.

The organic solvent used in the polyamic acid preparation is chosen appropriately from known organic solvents. For example, organic polar solvents may be used suitably, including N-methyl-2-pyrrolidone, N,N-dimethylformamide, N,N-dimethylacetamide, cresol, N,N-dimethyl sulfoxide, N-methyl caprolactam, methyl triglyme, methyl diglyme, and sulfolane.

The molecular weight of the polyamic acid contained in the polyamic acid solution composition used in the process of the invention is, but not limited to, a number average molecular weight of 1,000 to 150,000, preferably 10,000 to 150,000. While the polyamic acid has good solution stability, it may be partially imidized (part of its amide bond and carboxyl group may react with each other) as far as the solution keeps its homogeneity without suffering precipitation of the polymeric component nor gelation.

The polyamic acid solution composition used in the production process of the invention is characterized by containing a mixture of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system.

To put it more specifically, the mixed solvent system of the polyamic acid solution composition of the invention is a combination of N-methyl-2-pyrrolidone and N-ethyl-2-pyrrolidone, a combination of N-methyl-2-pyrrolidone and 1,3-dimethyl-2-imidazolidinone, a combination of N-ethyl-2-pyrrolidone and 1,3-dimethyl-2-imidazolidine, or a combination of N-methyl-2-pyrrolidone, N-ethyl-2-pyrrolidone, and 1,3-dimethyl-2-imidazolidinone. Each of the solvents making up the mixed solvent system is used in an amount of 7% to 93%, preferably 10% to 90%, more preferably 20% to 80%, by mass relative to the total mass of the solvent system.

If the proportion of any one of the solvents forming the mixed solvent system exceeds 93 mass% of the total solvent system, i.e., with the rest of the solvent system being less than 7 mass% of the total solvent system, it would be difficult to make a thick polyimide film without involving bubble formation by the method including applying a polyamic acid solution composition to a substrate followed by heating. It would also be difficult to obtain with ease a polyimide film excellent in heat resistance or mechanical properties, particularly tensile strength, tensile elastic modulus, and tear strength.

The polyamic acid solution composition used in the production process of the invention may be prepared conveniently by a method in which a polyamic acid once prepared is poured into a poor solvent for polyamide acid, such as methanol, to form a precipitate, which is isolated and then re-dissolved in the mixed solvent system according to the invention. It is more convenient, however, to use the mixed solvent system of the invention as a reaction solvent to prepare the polyamic acid solution. Otherwise, a polyamic acid solution may be prepared by using one of the solvents forming the mixed solvent system as a reaction solvent, and the resulting polyamic acid solution is mixed with the rest of the mixed solvent system.

The polyamic acid solution composition for use in the production process of the invention preferably has a solid concentration of 5% to 50%, more preferably 10% to 45%, even more preferably 20% to 40%, by mass in terms of polyimide. When the solid concentration is less than 5 mass%, the solvent should be used in a large quantity, which is uneconomical. When the solid concentration exceeds 50 mass%, the reaction system is so viscous as to tend to be

difficult to handle.

In addition to the above described polyamic acid as a polyimide precursor and mixed solvent, the polyamic acid solution composition used in the production process of the invention may contain an organic or inorganic fine filler, such as fine silica powder, boron nitride, alumina, or carbon black. The composition may further contain other components if desired. The other components that are preferably added to the composition are selected according to the intended use or required performance of the final product and include a plasticizer, a weathering agent, an antioxidant, a heat stabilizer, a lubricant, an antistatic agent, a whitening agent, a colorant (e.g., dye or pigment), a conducting agent (e.g., metal powder), a parting agent, a surface treating agent, a viscosity modifier, a coupling agent, and a surfactant. These additive components may be compounded into the polyamic acid solution composition either beforehand or on use.

Adding the fine filler to the polyamic acid solution composition can help preventing the composition from forming bubbles during the step of film formation and thus can favor the improvement in film forming (molding) properties. When the polyamic acid solution composition of the invention which contains the fine filler is used in carrying out the process of producing a polyimide film according to the invention, the mixed solvent system exhibits synergism with the filler in preventing bubble formation thereby to bring about further improved film forming (molding) properties. In the absence of the mixed solvent, the improvement in film forming properties obtained only by the addition of the fine filler is not necessarily sufficient, and the film thickness or film formation conditions may be restricted, or bubble formation may not be prevented even by altering the film thickness or film formation conditions. Moreover, other problems, such as crack formation during the film forming step, are liable to arise.

The process for producing a polyamide film according to the invention is characterized by using the polyamic acid solution composition having improved film forming (molding) properties by virtue of a specific mixed solvent system. It should be understood that the foregoing description is to illustrate the resultant improvement in film forming (molding) properties typically exemplified by prevention of bubble formation. Therefore, the improving effects of the invention are not limited to the prevention of bubble formation. The invention eases the restriction on film formation conditions, allowing for adopting broader ranges of conditions, controls the problems, such as crack formation in the resulting polyimide film, and additionally brings about improvement on mechanical properties, such as tear strength, of the polyimide film.

The process for producing a polyimide film according to the invention is **characterized in that** the aforementioned polyamic acid solution composition is applied to a substrate to form a coating layer, which is heated into a polyimide film with a thickness exceeding 40 μm.

As used herein, the term "substrate" means a base on which a polyamic acid is applied to form a coating layer. The substrate to be used is not limited in shape and material as long as it is dense enough to be substantially impermeable to liquid and gas. Suitable substrates include those known *per se* for the formation of film, such as a belt, a roller, and a mold; parts or products on the surface of which a film is to be provided, such as a printed circuit board, an electronic part, or a sliding part, the surface of which is to be protected with a polyimide film; and a film which is to be laminated with a polyimide film to provide a multilayer film.

The method of forming a coating layer on a substrate is chosen as appropriate from known coating techniques including spraying, roller coating, spin coating, bar coating, inkjet coating, screen printing, and slit coating.

The coating layer thus formed on a substrate may be defoamed by, for example, heating at a relatively low temperature under reduced pressure.

The coating layer of the polyamic acid solution composition formed on the substrate is subjected to heat treatment to remove the solvents and to imidize the polyamic acid, whereby a polyimide film is formed on the substrate. The heat treatment for imidization is preferably carried out by starting from a relatively low temperature of 140°C or lower to remove the solvents and then raising the temperature stepwise up to the highest temperature to complete imidization rather than starting at a high temperature. The imidization is preferably effected at a temperature of 140°C or higher for a period of 0.01 to 30 hours, more preferably 0.01 to 10 hours, even more preferably 0.01 to 6 hours, so as to leave substantially no amic acid bonds. The highest heating temperature is selected as appropriate from the range of from 275° to 500°C, usually from 275° to 450°C, preferably 300° to 450°C, more preferably 350° to 450°C. The heating time at the highest temperature is usually 0.01 to 20 hours, preferably 0.01 to 6 hours, more preferably 0.01 to 5 hours. The heating at stepwise increasing temperatures may be schedules as follows: heating at 80°C for 30 minutes, followed by heating at 130°C for 10 minutes, followed by 200°C for 10 minutes, and finally followed by heating at 400°C for 10 minutes, provided that the temperature is increased over 10 minutes between different steps of heating; or heating at 80°C for 30 minutes, followed by heating at 130°C for 10 minutes, followed by heating at temperatures stepwise increasing from 200°C up to 250°C by 10°C for 10 minutes to 2 hours at every temperature, and finally followed by heating at 400°C for 10 minutes, provided that the temperature is increased over 10 minutes between different steps of heating.

The process of producing a polyimide film according to the invention allows for very stable film formation. That is, the process makes it possible to produce a polyimide film free from such defects as bubbles and cracks even with a thickness more than 40 μm. In other words, the thickness of the polyimide film obtained by the process of the invention is more than 40 μm, preferably more than 45 μm, even more preferably more than 50 μm, most preferably more than 55 μm, and usually 200 μm or less, preferably 150 μm or less. When the polyimide film thickness is less than 40 μm,

the improvement on film forming (molding) properties is inapparent. When the polyimide film has a thickness exceeding 200 μm, it is difficult to sufficiently improve the film forming (molding) properties even by using the specific mixed solvent system of the invention.

Furthermore, the process of producing a polyimide film of the invention suitably produces mechanically strong polyimide films, i.e., a polyimide film having a tensile strength at break of 350 MPa or more, preferably 380 MPa or more, more preferably 400 MPa or more, and a tensile elongation at break of 30% or more; and a polyimide film having a tensile elastic modulus of 6.0 GPa or more, preferably 6.5 GPa or more, more preferably 7.0 GPa or more, most preferably 7.5 GPa or more. The process of producing a polyimide film of the invention also suitably produces a polyimide film having a tear strength of 4.0 N/mm or more, preferably 4.3 N/mm or more, more preferably 4.5 N/mm or more.

The polyimide film obtained in the invention is free from bubbles as a result of the improved film forming (molding) properties and also exhibits excellent mechanical properties as recited above. Therefore, it is suited for use as an overcoat layer, in a copper clad laminate (e.g., double-sided CCL) obtained by laminating with copper foil, particularly as a seamless belt formed by centrifugal casting.

A seamless belt is conveniently produced basically by the above described film formation process under the above described film formation conditions with the exception that a film is formed (molded) on the inner or outer circumferential surface of a cylindrical mold as a substrate while rotating the mold. It is advisable, however, to appropriately alter the conditions so that the drying for solvent removal may be performed for a longer period of time or that more time may be taken for heating or for temperature rise because, often in the case of a seamless belt, the thermal efficiency or the rate of solvent removal is controlled in the nature of the apparatus, the film thickness is thicker than usual (usually more than 40 μm, particularly about 50 to 150 μm), and a filler is used in a relatively larger amount. In the present invention, the heating conditions are preferably selected such that more time be taken for the heating at temperatures between 200°C and 250°C and for the rise in temperature in that temperature range.

A seamless belt may contain various fillers or other additives according to the use. The compounding additives are suitably added to the polyamic acid solution composition.The additives may be added to the solution before the reaction in the preparation of the polyamic acid solution.

In the production of a polyimide endless tubular belt for use as a fixing belt of a copying machine, for instance, it is suitable to add silica, boron nitride, alumina, or a like additive to improve thermal conductivity. In order to prevent a toner from being fused to the surface of the fixing belt, a release layer of a fluororesin, such as polytetrafluoroethylene, a tetrafluoroethylene-perfluoroalkyl vinyl ether copolymer, or a tetrafluoroethylene-hexafluoropropylene copolymer, may be provided on the surface of the fixing belt.

For use as a transfer belt of a copying machine, a polyimide endless tubular belt may preferably contain carbon black or a like additive to have semiconductivity.

## Examples

The invention will now be illustrated in greater detail with reference to Examples, but it should be understood that the invention is not deemed to be limited thereto.

Abbreviations used hereunder have the following meanings.

s-BPDA: 3,3',4,4'-biphenyltetracarboxylic acid dianhydride
PPD: p-phenylenediamine
NMP: N-methyl-2-pyrrolidone
NEP: N-ethyl-2-pyrrolidone
DMI: 1,3-dimethyl-2-imidazolidinone

(1) Tensile strength at break

Measured in accordance with ASTM D882 with a tensile tester RTC-1225A from Orientec Co., Ltd.

(2) Tensile elongation at break

Measured in accordance with ASTM D882 with a tensile tester RTC-1225A from Orientec Co., Ltd.

(3) Tensile elastic modulus

Measured in accordance with ASTM D882 with a tensile tester RTC-1225A from Orientec Co., Ltd.

(4) Tear strength

Measured in accordance with JIS K7128-1, trouser tear test method using a tensile tester RTC-1225A from Orientec Co., Ltd.

(5) Logarithmic viscosity number of solution composition

A polyamic solution composition was dissolved uniformly in N-methyl-2-pyrrolidone in a concentration of 0.5 g of the polyamic acid per 100 ml of the solvent system. The solution viscosity and the solvent viscosity were measured at 30°C to calculate the logarithmic viscosity number ($\eta_{inh}$) from equality:
$$\text{Logarithmic viscosity number } (\eta_{inh}) = \ln(\text{solution viscosity/solvent viscosity})/\text{solution concentration}$$

(6) Solid concentration

A polyamic solution composition weighing W1 was dried at 350°C for 30 minutes and weighed to obtain a dry weight W2. The solid concentration of the polyamic solution composition was calculated from the weights W1 and W2 according to equality:

$$\text{Solid concentration (wt\%)} = \{(W1-W2)/W1\}x100$$

(7) Solution viscosity

Measured at 30°C with an E type viscometer from Tokyo Keiki Inc.

(8) Appearance of polyimide film

The resulting polyimide film was observed with the naked eye. Polyimide films that are completely bubble-free are rated "good"; those that contain bubbles in about 30% of its entire body are rated "fair"; and those that contain bubbles to a higher degree are rated "poor".

Example 1

In a 500 ml glass reactor equipped with a stirrer and nitrogen inlet and outlet tubes were placed 300 g (75 mass% of the total solvent system) of NMP and 100 g (25 mass% of the total solvent system) of NEP as solvents. To the reactor were added 26.88 g (0.249 mol) of PPD and 73.12 g (0.249 mol) of s-BPDA, followed by stirring at 50°C for 10 hours to prepare a polyamic acid solution composition having a solid content of 18.5 wt%, a solution viscosity of 55.0 Pa·s, and a logarithmic viscosity number of 1.00.
The polyamic acid solution composition was applied to a glass plate substrate with a bar coater, and the coating layer thus obtained was subjected to defoaming and preliminary drying at 25°C for 30 minutes under reduced pressure. The coated substrate was placed in a hot air dryer under normal pressure in a nitrogen gas atmosphere and heated at 120°C for 60 minutes, 150°C for 30 minutes, 200°C for 10 minutes, 250°C for 10 minutes, and finally at 400°C for 10 minutes to form a 50 μm thick polyimide film. The resulting polyimide film had no bubbles.
The characteristics and the like of the polyimide film were determined. The results obtained are shown in Table 1.

Example 2

A 50 μm thick polyimide film was formed in the same manner as in Example 1, except for using 200 g (50 mass% of the total solvent system) of NMP and 200 g (50 mass% of the total solvent system) of NEP.
The characteristics and the like of the polyimide film were determined. The results obtained are shown in Table 1.

Example 3

A 75 μm thick polyimide film was formed in the same manner as in Example 1, except for using 200 g (50 mass% of the total solvent system) of NMP and 200 g (50 mass% of the total solvent system) of NEP.
The characteristics and the like of the polyimide film were determined. The results are shown in Table 1.

Example 4

A 50 μm thick polyimide film was formed in the same manner as in Example 1, except for using 100 g (25 mass% of the total solvent system) of NMP and 300 g (75 mass% of the total solvent system) of NEP.
The characteristics and the like of the polyimide film were determined. The results are shown in Table 1.

Example 5

A 50 μm thick polyimide film was formed in the same manner as in Example 1, except for using 300 g (75 mass% of the total solvent system) of NMP and 100 g (25 mass% of the total solvent system) of DMI.
The characteristics and the like of the polyimide film were determined. The results are shown in Table 1.

Example 6

A 50 μm thick polyimide film was formed in the same manner as in Example 1, except for using 200 g (50 mass% of the total solvent system) of NMP and 200 g (50 mass% of the total solvent system) of DMI.
The characteristics and the like of the polyimide film were determined. The results are shown in Table 1.

Example 7

A 50 μm thick polyimide film was formed in the same manner as in Example 1, except for using 100 g (25 mass% of the total solvent system) of NMP and 300 g (75 mass% of the total solvent system) of DMI.
The characteristics and the like of the polyimide film were determined. The results are shown in Table 1.

Example 8

A 50 μm thick polyimide film was formed in the same manner as in Example 1, except for using 300 g (75 mass% of the total solvent system) of NEP and 100 g (25 mass% of the total solvent system) of DMI.
The characteristics and the like of the polyimide film were determined. The results are shown in Table 1.

Example 9

A 50 μm thick polyimide film was formed in the same manner as in Example 1, except for using 200 g (50 mass% of the total solvent system) of NEP and 200 g (50 mass% of the total solvent system) of DMI.
The characteristics and the like of the polyimide film were determined. The results are shown in Table 1.

Example 10

A 75 μm thick polyimide film was formed in the same manner as in Example 1, except for using 200 g (50 mass% of the total solvent system) of NEP and 200 g (50 mass% of the total solvent system) of DMI.
The characteristics and the like of the polyimide film were determined. The results are shown in Table 1.

Example 11

A 50 μm thick polyimide film was formed in the same manner as in Example 1, except for using 100 g (25 mass% of the total solvent system) of NEP and 300 g (75 mass% of the total solvent system) of DMI.
The characteristics and the like of the polyimide film were determined. The results are shown in Table 1.

Example 12

A 75 μm thick polyimide film was formed in the same manner as in Example 1, except for using 100 g (25 mass% of the total solvent system) of NEP and 300 g (75 mass% of the total solvent system) of DMI.

The characteristics and the like of the polyimide film were determined. The results are shown in Table 1.

Comparative Example 1

A polyimide film was formed in the same manner as in Example 1, except for using 400 g (100 mass% of the total solvent system) of NMP. The resulting polyimide film contained bubbles throughout the entire body.
The characteristics and the like of the polyimide film were determined. The results are shown in Table 2.

Comparative Example 2

A polyimide film was formed in the same manner as in Example 1, except for using 400 g (100 mass% of the total solvent system) of NEP. The resulting polyimide film contained bubbles in about 30% of its entire body.
The characteristics and the like of the polyimide film were determined. The results are shown in Table 2.

Comparative Example 3

A polyimide film was formed in the same manner as in Example 1, except for using 400 g (100 mass% of the total solvent system) of DMI. The resulting polyimide film contained bubbles throughout the entire body.
The characteristics and the like of the polyimide film were determined. The results are shown in Table 2.

Comparative Example 4

A polyimide film was formed in the same manner as in Example 1, except for using 380 g (95 mass% of the total solvent system) of NMP and 20 g (5 mass% of the total solvent system) of NEP. The resulting polyimide film contained bubbles throughout the entire body.
The characteristics and the like of the polyimide film were determined. The results are shown in Table 2.

Comparative Example 5

A polyimide film was formed in the same manner as in Example 1, except for using 20 g (5 mass% of the total solvent system) of NMP and 380 g (95 mass% of the total solvent system) of NEP. The resulting polyimide film contained bubbles in about 30% of its entire body.
The characteristics and the like of the polyimide film were determined. The results are shown in Table 2.

Comparative Example 6

A polyimide film was formed in the same manner as in Example 1, except for using 380 g (95 mass% of the total solvent system) of NMP and 20 g (5 mass% of the total solvent system) of DMI. The resulting polyimide film contained bubbles throughout the entire body.
The characteristics and the like of the polyimide film were determined. The results are shown in Table 2.

Comparative Example 7

A polyimide film was formed in the same manner as in Example 1, except for using 20 g (5 mass% of the total solvent system) of NMP and 380 g (95 mass% of the total solvent system) of DMI. The resulting polyimide film contained bubbles in about 30% of the entire body.
The characteristics and the like of the polyimide film were determined. The results are shown in Table 2.

Comparative Example 8

A polyimide film was formed in the same manner as in Example 1, except for using 380 g (95 mass% of the total solvent system) of NEP and 20 g (5 mass% of the total solvent system) of DMI. The resulting polyimide film contained bubbles in about 30% of the entire body.
The characteristics and the like of the polyimide film were determined. The results are shown in Table 2.

Comparative Example 9

A polyimide film was formed in the same manner as in Example 1, except for using 20 g (5 mass% of the total

solvent system) of NEP and 380 g (95 mass% of the total solvent system) of DMI. The resulting polyimide film contained bubbles throughout the entire body.
The characteristics and the like of the polyimide film were determined. The results are shown in Table 2.

Comparative Example 10

A polyimide film was formed in the same manner as in Example 1, except for using 200 g (50 mass% of the total solvent system) of NMP and 200 g (50 mass% of the total solvent system) of γ-butyrolactone. The resulting polyimide film contained bubbles throughout the entire body.
The characteristics and the like of the polyimide film were determined. The results are shown in Table 2.

Comparative Example 11

An attempt to carry out polymerization reaction in the same manner as in Example 1, except for using 200 g (50 mass% of the total solvent system) of NMP and 200 g (50 mass% of the total solvent system) of cyclohexanone, was unsuccessful in providing a polyamic acid on account of gelation of the system.

Comparative Example 12

A polyimide film was formed in the same manner as in Example 1, except for using 200 g (50 mass% of the total solvent system) of NMP and 200 g (50 mass% of the total solvent system) of triglyme. The resulting polyimide film was cloudy and contained bubbles throughout the entire body.
The characteristics and the like of the polyimide film were determined. The results are shown in Table 2.

Comparative Example 13

A polyimide film was formed in the same manner as in Example 1, except for using 200 g (50 mass% of the total solvent system) of NMP and 200 g (50 mass% of the total solvent system) of diglyme. The resulting polyimide film contained bubbles throughout the entire body.
The characteristics and the like of the polyimide film were determined. The results are shown in Table 2.
Table 1

| | | Example No. | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Composition of Polyamic Acid: | | | | | | | | | | | | | |
| Acid Component (mol%) | s-BPDA | 100 | 100 | 100 | 100 | 100 | 100 | 100 | 100 | 100 | 100 | 100 | 100 |
| Diamine Component (mol%) | PPD | 100 | 100 | 100 | 100 | 100 | 100 | 100 | 100 | 100 | 100 | 100 | 100 |
| Solvent (mass%) | NMP | 75 | 50 | 50 | 25 | 75 | 50 | 25 | | | | | |
| | NEP | 25 | 50 | 50 | 75 | | | | 75 | 50 | 50 | 25 | 25 |
| | DMI | | | | | 25 | 50 | 75 | 25 | 50 | 50 | 75 | 75 |
| Polyamic Acid Solution Composition: | | | | | | | | | | | | | |
| Logarithmic Viscosity Number | | 1.00 | 1.01 | 1.01 | 1.01 | 1.01 | 1.00 | 1.00 | 1.00 | 1.00 | 1.00 | 1.00 | 1.00 |
| Solid Concentration (mass%) | | 18.5 | 18.6 | 18.6 | 18.7 | 18.5 | 18.7 | 18.7 | 18.5 | 18.5 | 18.5 | 18.4 | 18.4 |
| Solution Viscosity (Pa·s) | | 55.0 | 62.0 | 62.0 | 66.0 | 68.0 | 77.5 | 104.0 | 84.0 | 98.8 | 98.8 | 110.0 | 110.0 |
| Polyimide Film: | | | | | | | | | | | | | |
| Thickness (μm) | | 50 | 50 | 75 | 50 | 50 | 50 | 50 | 50 | 50 | 75 | 50 | 75 |
| Tensile strength (MPa) | | 443 | 409 | 395 | 424 | 410 | 471 | 405 | 416 | 395 | 380 | 375 | 360 |
| Elongation (%) | | 44 | 32 | 43 | 40 | 41 | 45 | 40 | 42 | 39 | 48 | 33 | 44 |
| Tensile Elastic Modulus (MPa) | | 8.3 | 8.0 | 7.7 | 7.8 | 7.8 | 7.8 | 7.5 | 7.9 | 7.9 | 7.6 | 7.6 | 7.3 |
| Tear Strength (N/mm) | | 4.5 | 4.7 | 4.5 | 4.6 | 4.6 | 4.8 | 4.5 | 4.7 | 4.6 | 4.4 | 4.4 | 4.3 |
| Appearance | | good | good | good | good | good | good | good | good | good | good | good | good |

Table 2

| | | Comparative Example No. | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Composition of Polyamic Acid: | | | | | | | | | | | | | | |
| Acid Component (mol%) | s-BPDA | 100 | 100 | 100 | 100 | 100 | 100 | 100 | 100 | 100 | 100 | 100 | 100 | 100 |
| Diamine Component (mol%) | PPD | 100 | 100 | 100 | 100 | 100 | 100 | 100 | 100 | 100 | 100 | 100 | 100 | 100 |
| Solvent (mass%) | NMP | 100 | | | 95 | 5 | 95 | 5 | | | 50 | 50 | 50 | 50 |
| | NEP | | 100 | | 5 | 95 | | | 95 | 5 | | | | |
| | DMI | | | 100 | | | 5 | 95 | 5 | 95 | | | | |
| | γ-Butyrolactone | | | | | | | | | | 50 | | | |
| | Cyclohexanone | | | | | | | | | | | 50 | | |
| | Triglyme | | | | | | | | | | | | 50 | |
| | Diglyme | | | | | | | | | | | | | 50 |
| Polyamic Acid Solution Composition: | | | | | | | | | | | | | | |
| Logarithmic Viscosity Number | | 1.02 | 1.00 | 1.00 | 1.02 | 1.00 | 1.02 | 1.00 | 1.00 | 1.00 | 0.58 | not polymerized | 0.58 | 0.50 |
| Solid Concentration (mass%) | | 18.4 | 18.8 | 18.4 | 18.5 | 18.7 | 18.4 | 18.4 | 18.4 | 18.5 | 18.7 | | 13.5 | 13.5 |
| Solution Viscosity (Pa·s) | | 50.0 | 71.3 | 122.5 | 52.0 | 70.0 | 53.6 | 118.5 | 74.0 | 120.0 | 193.0 | | 6.3 | 3.0 |
| Polyimide Film: | | | | | | | | | | | | | | |
| Thickness (μm) | | unmeasurable due to bubble formation | unmeasurable due to bubble formation | unmeasurable due to bubble formation | unmeasurable due to bubble formation | unmeasurable due to bubble formation | unmeasurable due to bubble formation | unmeasurable due to bubble formation | unmeasurable due to bubble formation | unmeasurable due to bubble formation | unmeasurable due to bubble formation | not polymerized due to gelation | unmeasurable due to bubble formation; cloudy film | unmeasurable due to bubble formation |
| Tensile strength (MPa) | | | | | | | | | | | | | | |
| Elongation (%) | | | | | | | | | | | | | | |
| Tensile Elastic Modulus (MPa) | | | | | | | | | | | | | | |
| Tear Strength (N/mm) | | | | | | | | | | | | | | |
| Appearance | | poor | fair | poor | poor | fair | poor | poor | fair | poor | poor | poor | poor | poor |

INDUSTRIAL APPLICABILITY

In the production of a polyimide film mainly from s-BPDA and PPD including the steps of applying a polyamic acid solution composition to a substrate and heating the coating layer, the invention provides an improvement of film forming (or molding) properties such that a thick polyimide film having excellent heat resistance and mechanical properties, especially tensile strength, tensile elastic modulus, and tear strength is manufactured easily, for example, without involving bubble formation. The invention also provides a polyamic acid solution composition used to carry out the above described process of producing a polyimide film.

## Claims

1. A process of producing a polyimide film having a thickness exceeding 40 μm without involving bubble formation, which comprises the steps of applying a polyamic acid solution composition to a substrate to form a coating layer and heating the coating layer,
   the polyamic acid solution composition comprising a mixed solvent system of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system, and a polyamic acid having, as a main component, a repeating unit represented by chemical formula (1):

   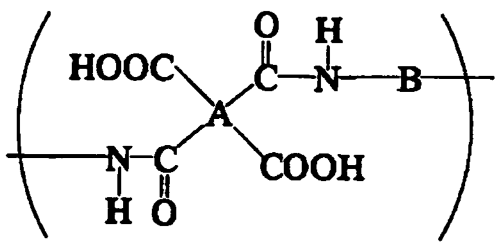

   Chemical formula (1)

   wherein A represents chemical formula (2):

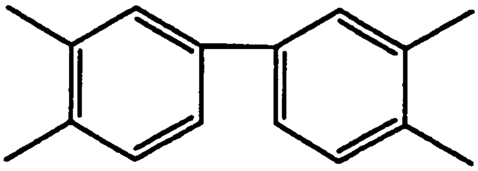

Chemical formula (2)

and B represents chemical formula (3).

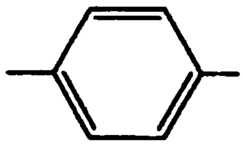

Chemical formula (3)

2. The process of producing a polyimide film according to claim 1, wherein the polyimide film has a tensile strength at break of 350 MPa or more and a tensile elongation at break of 30% or more.

3. The process of producing a polyimide film according to claim 1 or 2, wherein the polyimide film has a tensile elastic modulus of 6.0 GPa or more.

4. The process of producing a polyimide film according to any one of claims 1 to 3, wherein the polyimide film has a tear strength of 4.0 N/mm or more.

5. The process of producing a polyimide film according to any one of claims 1 to 4, wherein the highest temperature in the step of heating is 275 to 450°C.

6. The process of producing a polyimide film according to any one of claims 1 to 5, wherein the polyimide film is a seamless belt.

7. A polyamic acid solution composition for use in the production of a polyimide film with a thickness exceeding 40 μm, comprising a mixed solvent system of at least two solvents selected from N-methyl-2-pyrrolidone, N-ethyl-2-pyrrolidone, and 1,3-dimethyl-2-imidazolidinone, each solvent being present in a proportion ranging from 7% to 93% based on the total mixed solvent system, and a polyamic acid having, as a main component, a repeating unit represented by the chemical formula (1) above.

**INTERNATIONAL SEARCH REPORT**

International application No.
PCT/JP2008/067058

A. CLASSIFICATION OF SUBJECT MATTER
*C08J5/18*(2006.01)i, *B29C41/04*(2006.01)i, *C08L79/04*(2006.01)i

According to International Patent Classification (IPC) or to both national classification and IPC

B. FIELDS SEARCHED

Minimum documentation searched (classification system followed by classification symbols)
C08J5/18, B29C41/00-41/52, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-51698 A (Chisso Corp.), 19 February, 2004 (19.02.04), Comparative example 4; Par. Nos. [0016], [0017] (Family: none) | 1-7 |
| A | JP 2006-272839 A (Nitto Denko Corp.), 12 October, 2006 (12.10.06), Full text (Family: none) | 1-7 |
| A | JP 2005-163007 A (Fuji Xerox Co., Ltd.), 23 June, 2005 (23.06.05), Full text (Family: none) | 1-7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 November, 2008 (20.11.08) | 02 December, 2008 (02.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55007805 A
- JP 2005163007 A
- JP 2006272839 A